# EUROPEAN PATENT SPECIFICATION

(11) **EP 3 429 829 B1**
(45) Date of publication and mention of the grant of the patent: **09.02.2022**
(21) Application number: 16910720.8
(22) Date of filing: 28.07.2016
(51) Int. Cl.: B29C 64/165, G02B 3/00, B82Y 30/00, B33Y 70/10, B29D 11/00, G02B 13/00

(54) **OPTICALLY ACTIVE MATERIAL SETS**
OPTISCH AKTIVE MATERIALSÄTZE
ENSEMBLES DE MATÉRIAUX OPTIQUEMENT ACTIFS

(43) Date of publication of application: 23.01.2019
(73) Proprietor: Hewlett-Packard Development Company, L.P., Spring TX 77389 (US)
(72) Inventor: STASIAK, James William, Corvallis, Oregon 97330-4239 (US)
(74) Representative: HGF
(86) International application number: PCT/US2016/044369
(87) International publication number: WO 2018/022051

(56) References cited:
- EP-A1- 1 666 234
- EP-A1- 2 969 482
- WO-A2-2005/057245
- US-A- 5 351 151
- US-A1- 2007 241 482
- US-A1- 2015 343 673
- US-A1- 2015 361 286
- US-A1- 2016 054 474
- US-A1- 2016 054 474
- David A Roper ET AL: "Additive manufacturing of graded dielectrics", Smart Materials and Structures, vol. 23 6 March 2014 (2014-03-06), pages 1-9, XP055631913, Retrieved from the Internet: URL:https://pdfs.semanticscholar.org/4334/ a0bab1f5ae4ef6c87def30c26d097e143a20.pdf [retrieved on 2019-10-14]

## Description

### BACKGROUND

Methods of 3-dimensional (3D) digital printing, a type of additive manufacturing, have continued to be developed over the last few decades. However, systems for 3D printing have historically been very expensive, though those expenses have been coming down to more affordable levels recently. In general, 3D printing technology improves the product development cycle by allowing rapid creation of prototype models for reviewing and testing. Unfortunately, the concept has been somewhat limited with respect to commercial production capabilities because the range of materials used in 3D printing is likewise limited. Nevertheless, several commercial sectors have benefitted from the ability to rapidly prototype and customize parts for customers. Various methods for 3D printing have been developed, including heat-assisted extrusion, selective laser sintering (SLS), fused deposition modelling (FDM), photolithography, as well as others. Accordingly, development of new 3D printing technologies continues, including the area of functionalizing 3D printed objects.

US 2016/054474 A1 discloses a GRIN optical structure composed of a polymer matrix, doped with nanocrystals. US 2015/361286 discloses an optical dispersion corrected optical element comprising a first nanocomposite ink comprising nanofillers dispersed in a cured organic matrix and a different second nanocomposite ink, wherein the distribution of the first and second nanocomposite ink results in optical dispersion refractive gradients.

### BRIEF DESCRIPTION OF THE DRAWINGS

FIG 1 is an example schematic representation of inkjettable fluids, which can be used to apply dielectric nanoparticles to particulate build materials, and which in combination can be used for forming 3D GRIN lenses in accordance with examples of the present disclosure.
FIG. 2 is an alternative example schematic representation of inkjettable fluids which can be used to apply dielectric nanoparticles to particulate build materials, and which in combination can be used for forming 3D GRIN lenses in accordance with examples of the present disclosure;
FIG. 3 is an example schematic representation of the formation of 3D GRIN lenses in accordance with the present disclosure;
FIG. 4 is an example schematic representation of a GRIN lens stack or assembly that can be prepared in accordance with examples of the present disclosure; and
FIG. 5 provides an example depicting effective capacitance increase, and thus effective refractive index increase, based on increasing concentration or number density of dielectric nanoparticles printed accordance with the present disclosure.

### DETAILED DESCRIPTION

The invention is defined by the appended claims.

The present disclosure relates to powder bed three dimensional printing where 3D optics can be prepared digitally by printing dielectric nanoparticles onto optically transparent or translucent particulate build material which includes polymer particles. In certain examples, lateral gradients along the x-y axis (within a layer), and/or vertical gradients along the z-axis (from layer to layer), can be printed by modifying a number density of dielectric nanoparticles at voxel by voxel level. A "voxel" is the basic volumetric building block used to fabricate three-dimensional objects. Mathematically, a voxel is determined by two spatial parameters in the x-y coordinate plane and a third parameter which determines the voxel's depth, z. Each layer printed has as many voxels as can be printed, limited in size at the bottom end by the drop size of the printed fluid).

Essentially, a particulate polymer build material, which can be transparent or nearly transparent (e.g., 85% to 100% or from 90% to 100% transparent when fused), can be spread out layer by layer in a configuration to receive digitally printed liquid droplets containing dielectric nanoparticles. It is notable that there is a physical relationship between a material's dielectric constant (denoted by the parameter ε ) and it's refractive index (denoted by the parameter *n* ). The relationship can be derived from Maxwell's equations which states that *n* = (ε / ε₀)^{1/2} where ε is the dielectric constant of the optical material and ε₀ is the permittivity of vacuum (a fundamental physical constant). The light bending properties of an optical element can be determined by spatial and volumetric variations of the optical material's refractive index. Thus, by printing dielectric nanoparticles at specific locations, the local refractive index of each voxel can be determined contributing to the light bending characteristics of an optical element composed of such voxels. Thus, material sets as described herein can be suitable for producing a gradient refractive index (GRIN) lens or a stack of GRIN lenses. For example, droplets of liquid vehicle and dielectric nanoparticles can be printed at the voxel level along a layer of polymer build material, and then the layer can be heat fused, thus forming a lenslet layer that can be built upon to form a lens or even a lens stack with optical spacers. By changing the density of dielectric nanoparticles locally at the voxel level, the refractive index at various locations can also be changed. In other words, dielectric nanoparticles can be printed at the voxel level to predictably shift the effective dielectric constant of a polymer build material by controlling the mass fraction of dielectric nanoparticles per voxel. This can be shown by comparison to its capacitance. As capacitance increases, effective refractive index increases. A GRIN lens may be formed by varying the effective refractive index (using different concentrations of dielectric nanoparticles) within each layer as appropriate to form the GRIN lens. Lenses or lens stacks can be prepared by additive layering until a desired optical structure is formed.

In accordance with this, the present disclosure is drawn an optically active material set which can include a particulate build material including polymer particles having an average particle size from 10 µm to 100 µm, wherein the particulate build material as a whole has a transparency from 85% to 100% (which is measured for purposes of determining transparency after heat fusing at 100 µm thick). The material set can further include an inkjettable fluid for application to the build material for 3D printing. The inkjettable fluid may include dielectric nanoparticles having an average particle size from 1 nm to 100 nm. In one example, the material set may further include a fusing agent present in the inkjettable fluid. In another example, a fusing agent may present in a second inkjettable fluid. In another example, fusing anent may be used and may be present in both the inkjettable fluid and the second inkjettable fluid. Whether or not a fusing agent is used, in one example, the inkjettable fluid (that includes the dielectric nanoparticles) can be sufficiently colorless (colorless or substantially colorless) so that when printed on the at a mass fraction of 50% followed by fusing above a melting temperature of the polymer particles of the particulate build material, the transparency can be from 80% to 100%. Notably, the mass fraction can be printed at any mass fraction desired to modify the effective refractive index, but the 50% mass fraction is merely for use as a test to determine the transparency of the fused 3D printed lens after printing and heat fusing the materials together.

A Gradient Refractive Index lens (or "GRIN" lens) is also disclosed and can include a heat fused polymer having dielectric nanoparticles dispersed therein, wherein the dielectric nanoparticles are dispersed at a varied number density to generate an effective refractive index gradient along the GRIN lens, e.g., laterally along a layer. In one example, the effective refractive index along the GRIN lens can be different than that of the heat fused polymer without the dielectric nanoparticles dispersed therein. In another example, the GRIN lens can include multiple lenslet layers that are stacked. The lenslet layers can include the heat fused polymer having the dielectric nanoparticles dispersed therein, and individual lenslet layers have a thickness of about 100 µm or less.

A GRIN lens stack can include a first GRIN lens including heat fused polymer having dielectric nanoparticles dispersed therein, wherein the dielectric nanoparticles are dispersed at a variable number density to generate an effective refractive index gradient along the first GRIN lens. The GRIN lens stack includes a second GRIN lens including heat fused polymer having dielectric nanoparticles dispersed therein, wherein the dielectric nanoparticles are dispersed at a variable number density to generate an effective refractive index gradient along the second GRIN lens. The GRIN lens stack also includes
an optical spacer including heat fused polymer without dielectric nanoparticles dispersed therein. The optical spacer can be between the first GRIN lens and the second GRIN lens. The first GRIN lens, the optical spacer, and the second GRIN lens are in the form of a unified monolithic part. In one example, the first GRIN lens and the second GRIN lens may have a different distribution of dielectric nanoparticles from one another such that the first GRIN lens and the second GRIN lens have a different effective refractive index gradient compared to one another. In another example, the GRIN lens stack can further include a third GRIN lens including heat fused polymer having dielectric nanoparticles dispersed therein, wherein the dielectric nanoparticles are dispersed at variable number density to generate an effective refractive index gradient along the second GRIN lens. In the GRIN lenses described above, the gradient of the GRIN lens can also be different than the heat fused polymer without the dielectric nanoparticles dispersed therein.

In the present disclosure, it is noted that when discussing the optically material set, or the GRIN lens, or the GRIN lens stack, each of these discussions can be considered applicable to each of these examples, whether or not they are explicitly discussed in the context of that example. Thus, for example, in discussing details about the optically active material set or the GRIN lens or stack *per se,* such discussion also refers to the other, and *vice versa.*

In examples of the present disclosure, this technology can be used with a wide variety of printing architecture, including piezo printing systems or thermal inkjet printing systems. In one example, HP's Multi Jet Fusion technology, can be used, thus benefitting from drop-on-demand digital patterning making possible the printing at any location in a print zone at a high spatial resolution. High spatial resolution and "all-points-addressability" makes it possible to dispense a range of inks into and onto particulate build material at the unit voxel scale, as mentioned. A general example of a 3D printing process begins with the application of a thin powder or particulate build material layer in the working zone of the printer. The particulate build material can be selected to include one or more of a set of polymers that possesses moderately low melting points over a range of temperatures (e.g., < 200°C), or higher melting points ranging from 200°C to 500°C. The polymer particles used for the particulate build material are semi-crystalline, or crystalline, but have in common that when they are heat fused/melted and then cooled to form the lens, they have a transparency that is from 85% to 100%, or even from 90% to 100% (measured at 100 µm thick after heat fusing).

With respect to amorphous polymers, which are not part of the invention, this type of polymer does not tend to have a set melting point, but rather with a temperature range, slowly softens and melts over a 10 °C to 60 °C range, for example. This temperature range can be obtained using the Vicat softening point range. That being stated, this temperature range may typically be within the more general temperature range of about 70°C to about 350°C. In one specific example, the amorphous polymer build material can be polymethyl methacrylate (PMMA) having a melting range from about 100 °C to 150 °C or from 120 °C to 150 °C, or polycarbonate having a melting range from about 140 °C to 150 °C. On the other hand, some of these polymers may begin to soften between at from about 50 °C to about 110 °C, and then may melt at about 110 °C to about 150 °C, e.g., about 130 °C. These values can be dependent to some degree on the material's properties and manufacturer. Examples of amorphous polymer particles include polymethyl methacrylate, polycarbonate, polystyrene, polyvinylchloride, polypropylene, polyamideimide, polyethersulphone, polyetherimide polyarylate, polysulphone, or blends thereof.

Crystalline polymers that may be of use include polypropylene, syndiotactic polystyrene, polyamides, and/or polyketones, and such polymers can be selected based on their optical clarity or transparency, e.g., from 85% to 100% or from 90% to 100% transparency. These polymers have more specific melting points that occur at a predictable temperature. Thus, depending on the polymer, the composition can be heat fused above the melting point, and then when cooled to below the melting point, the polymer has a more precipitous recrystallization. One crystalline polymer that has acceptable post fuse transparency ispolymethylpentene. This polymer has a relatively high melting point, but can maintain optical clarity when melted and fused. Other semi-crystalline or crystalline polymer particles that can be used include polytetrafluororthylene, polyphenylene sulfide, polyethylene terephthalate, polyoxymethylene, high density polyethylene, or blends thereof.

The particulate build material has an average particle size from 10 µm to 100 µm, as mentioned. The particles can have a variety of shapes, such as substantially spherical particles, or substantially oval or irregularly-shaped particles up to an average 2:1 aspect ratio (long axis to shortest axis). In some examples, the polymer powder can be capable of being formed into 3D printed parts with a resolution of 10 µm to 100 µm. As used herein, "resolution" refers to the size of the smallest feature that can be formed on a 3D printed part. The polymer powder can form layers from about 10 µm to 100 µm thick, allowing the coalesced layers of the printed part to have roughly the same thickness. This can provide a resolution in the z-axis direction of about 10 µm to 100 µm. The polymer powder can also have a sufficiently small particle size and sufficiently regular particle shape to provide about 10 µm to 100 µm resolution along the x-axis and y-axis.

Turning now to the inkjet fluids that can be used with the present disclosure, it is notable that the inkjet fluids may contain the dielectric nanoparticles and/or binding agent. For example, dielectric nanoparticles may be present in an inkjettable fluid, and in some examples, the inkjettable fluid may also include a fusing agent. In some other examples, a second inkjettable fluid may be used that includes a binding agent. In any of these examples, the inkjettable fluid can contain dielectric nanoparticles that can be printed on the particulate build material to solidify the build material for layer 3D part building. Upon applying heat appropriate for the materials used, a 3D part can be fused and formed that optically translucent or transparent.

Dielectric nanoparticles that can be used include, but are not limited to, BaTiO₃, PMN-PT (e.g., 65/35), PbNb₂O₆, PLZT (e.g., 7/60/40), SiO₂, Al₂O₃, Ta₂O₅, TiO₂, SrTiO₃, ZrO₂, HfO₂, HfSiO₄, La₂O₃, Y₂O₃, α-LaAlO₃, CaCu₃Ti₄O₁₂, and/or La_{1.8}Sr_{0.2}NiO₄, to name a few. The particle size of the dielectric nanoparticles may be, for example from 1 nm to 100 nm, or from 1 nm to 50 nm, or from 5 nm to 30 nm, or from 20 nm to 100 nm, or from 50 nm to 100 nm in average particle size. The inkjettable fluid can be printed at various volumes on the particulate build material. When using a single ink with one concentration of dielectric nanoparticles, applying more ink to a given voxel will result in a greater mass fraction of dielectric nanoparticles (and thus, increased light bending). Increasing mass fraction of dielectric nanoparticles can be carried out by ejecting higher drop volumes, ejecting more drops at a give voxel, or by printing multiple passes of fluid at a single voxel location. In another example, multiple inkjettable fluids can be prepared with different concentrations of dielectric nanoparticles. The multiple fluids can likewise be printed at different fluid volumes as well for additional flexibility.

**As** mentioned briefly, the dielectric nanoparticles can be applied to the particulate build material with or without a fusing agent (within the same fluid), or can be applied digitally along with a second inkjettable fluid that is fusible. If printed along with a fusing agent, whether the dielectric nanoparticles are applied with within a fusible fluid or applied along side of a fusible fluid, once patterned, the powder layer can be exposed to a high energy photo energy source that matches or overlaps the frequency at which the fusing agent is activated (the fusing agent may be present in a fusible fluid to cause the printed lens, spacers, etc., to fuse when electromagnetic energy is applied). For example, for an IR absorbing fluid and an infra-red photo energy source can be used that fuse regions that have been printed with the IR absorbing fluid, leaving unprinted areas unchanged. The unfused powder can then be removed leaving behind a three-dimensional pattern of the printed lens, lens stack, spacer, etc. This layer-by-layer process can be repeated as many times as desired to produce a final three-dimensional component.

Fusing agents, if used, can be selected based upon the energy source used during the fusing process, or can be more simple compounds, such as polymeric binders that may be used to temporarily bind a printed layer prior to fusing. Because these compositions may be used for printing optically transparent or translucent optics, small amounts may be selected for use, or fusing agents that may be more optically clear may be used, such as some conjugated polymers or certain IR dyes.

Regarding the inkjettable fluids described herein, these fluids can include a liquid vehicle to carry the dielectric nanoparticles and/or the fusing agent to the particulate build material. In some examples, the liquid vehicle formulation can be water, or water and one or more co-solvents present in total at from 1 wt% to 50 wt% (of co-solvent), depending on the jetting architecture. Further, one or more non-ionic, cationic, and/or anionic surfactant can optionally be present, ranging from 0.01 wt% to 20 wt%. In one example, the surfactant can be present in an amount from 5 wt% to 20 wt%. The liquid vehicle can also include dispersants in an amount from 5 wt% to 20 wt%. In addition to the water, the balance of the formulation can be other vehicle components such as biocides, viscosity modifiers, materials for pH adjustment, sequestering agents, preservatives, and the like. In one example, the liquid vehicle can be predominantly water. In some examples, a water-dispersible polymer can be used with an aqueous vehicle. In some examples, the ink can be substantially free of organic solvent. However, in other examples, a co-solvent can be used to help dissolve or disperse dyes or pigments, or improve the jetting properties of the ink, or for other purposes. In still further examples, a non-aqueous vehicle can be used.

Classes of co-solvents that can be used can include organic co-solvents including aliphatic alcohols, aromatic alcohols, diols, glycol ethers, polyglycol ethers, caprolactams, formamides, acetamides, and long chain alcohols. Examples of such compounds include primary aliphatic alcohols, secondary aliphatic alcohols, 1,2-alcohols, 1,3-alcohols, 1,5-alcohols, ethylene glycol alkyl ethers, propylene glycol alkyl ethers, higher homologs (C₆-C₁₂) of polyethylene glycol alkyl ethers, N-alkyl caprolactams, unsubstituted caprolactams, both substituted and unsubstituted formamides, both substituted and unsubstituted acetamides, and the like. Specific examples of solvents that can be used include, but are not limited to, 2-pyrrolidinone, N-methylpyrrolidone, 2-hydroxyethyl-2-pyrrolidone, 2-methyl-1,3-propanediol, tetraethylene glycol, 1,6-hexanediol, 1,5-hexanediol and 1,5-pentanediol. Any others that may be functional as part of a liquid vehicle can likewise be used.

In certain examples, a co-solvent or liquid vehicle can be formulated in general that has a high vapor pressure. In such example, the high vapor pressure vehicle or vehicle components can be formulated to thus evaporate quickly, leaving the DEH stranded on the polymer particles when dispensed on the particulate build material.

One or more surfactants can also be used, such as alkyl polyethylene oxides, alkyl phenyl polyethylene oxides, polyethylene oxide block copolymers, acetylenic polyethylene oxides, polyethylene oxide (di)esters, polyethylene oxide amines, protonated polyethylene oxide amines, protonated polyethylene oxide amides, dimethicone copolyols, substituted amine oxides, and the like. The amount of surfactant added to the formulation of this disclosure may range from 0.01 wt% to 20 wt%. Suitable surfactants can include, but are not limited to, liponic esters such as Tergitol^{™} 15-S-12, Tergitol^{™} 15-S-7 available from Dow Chemical Company, LEG-1 and LEG-7; Triton^{™} X-100; Triton^{™} X-405 available from Dow Chemical Company ; and sodium dodecylsulfate. Any others that may be functional as part of a liquid vehicle can likewise be used.

Consistent with the formulation of this disclosure, various other additives can be employed to provide desired properties to the ink(s) for specific applications. Examples of these additives are those added to inhibit the growth of harmful microorganisms. These additives may be biocides, fungicides, and other microbial agents, which are routinely used in ink formulations. Examples of suitable microbial agents include, but are not limited to, NUOSEPT^{®} (Nudex, Inc.), UCARCIDE^{™} (Union carbide Corp.), VANCIDE^{®} (R.T. Vanderbilt Co.), PROXEL^{®} (ICI America), and combinations thereof. Any others that may be functional as part of a liquid vehicle can likewise be used.

Sequestering agents, such as EDTA (ethylene diamine tetra acetic acid), may be included to eliminate the deleterious effects of heavy metal impurities, and buffer solutions may be used to control the pH of the ink. From 0.01 wt% to 2 wt%, for example, can be used. Viscosity modifiers and buffers may also be present, as well as other additives to modify properties of the ink as desired. Such additives can be present at from 0.01 wt% to 20 wt%.

Regarding relative concentrations of the dielectric nanoparticles in the material sets of the present disclosure, these concentrations can depend on the specific material set in which the nanoparticles are used. For example, a range of dielectric nanoparticles in the inkjettable fluid can be from 5 wt% to 60 wt%, from 10 wt% to 50 wt%, or from 15 wt% to 40 wt%. The balance can be water or other liquid vehicle, e.g., water admixed with solvent such as toluene or any other liquid vehicle described herein in generally. In some example, a high vapor pressure solvent can be present that may be more readily removed when printed into a powder bed.

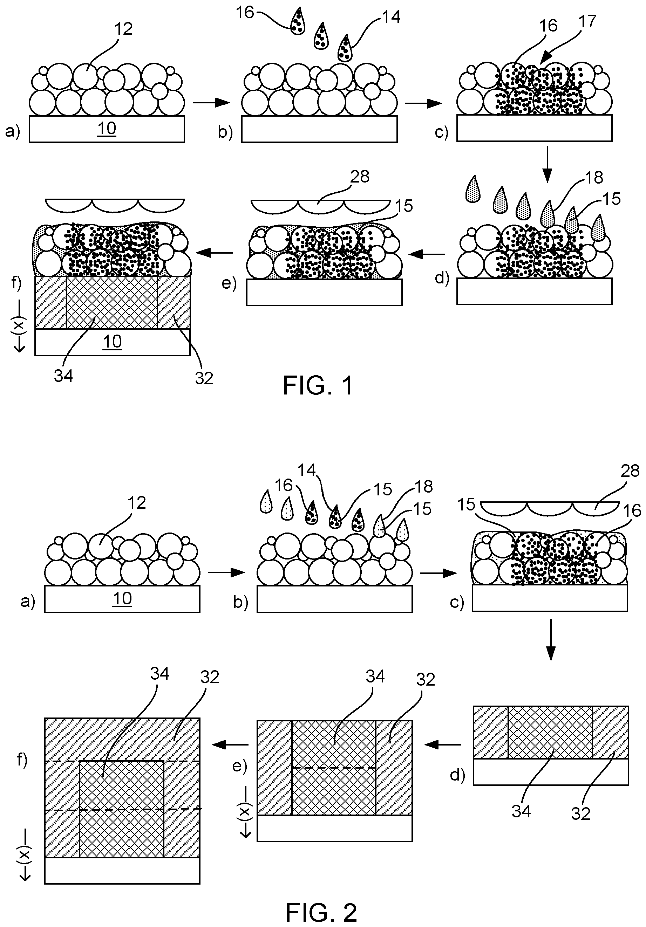

Turning now to the various technologies for providing dielectric nanoparticles to the particulate build material (which includes polymer particles), in accordance with one example of the present disclosure, an inkjettable fluid can be used as a delivery mechanism for depositing the dielectric nanoparticles into the particulate build material or powder medium. As fluid penetrates into the polymer build material, dielectric nanoparticles can become stranded on and/or between the polymer particles. At large enough mass fractions, the microscopic physical properties that relate to optics (based on modifying effective capacitance, which is related to effective refractive index) of the doped voxel can be modified. By placing dielectric nanoparticles, for example at predetermined concentration or at various concentrations (laterally and/or vertically) at a gradient along the structure being printed, GRIN lenses can be formed accordingly. The concentration (e.g., mass fraction) of the dielectric nanoparticles, or the pattern of dielectric particles being printed, or both, can provide unique light bending properties; and because these nanoparticles can be printed digitally, they can be printed at any concentration and/or pattern desired to obtain an optical or light bending property. This printing scheme is shown generally in FIGS. 1 and/or 2, for example. It is noted that there are six (6) steps shown (a-f) in FIGS. 1 and 2 that exemplify aspects of the system, but this is done merely for convenience in describing one possible process. Additionally, similar structures shown in each of the six steps (a-f) are labeled with reference numerals once or twice, but such references are applicable throughout all of FIGS. 1 and 2 for clarity if viewing and understanding the FIGS. Additionally, it is noted that both of these examples describe the use of a fixing agent, but in practice, there are examples where a fixing agent is not used to form the lens structure itself (as some fixing agents may reduce the optical clarity of the fused image. Essentially, a thin layer of particulate build material is spread out, inkjettable fluid with dielectric nanoparticles are printed thereon, and the layer is heat fused, for example. Then this process is repeated until the lens is formed. Layers can also be formed with the inkjettable fluid when forming optical spacers for example.

In FIG. 1, a system is shown in accordance with examples of the present disclosure. Thus, in FIG. 1, a) shows substrate or build platform 10 which has a thin layer of polymer build material 12 deposited thereon. In other words, the particulate build material in this example is spread in a thin layer on the build platform. Next, b) shows microdroplets of an inkjettable fluid 14 containing dielectric nanoparticles 16. The droplets are printed on the build material, and as the liquid vehicle evaporates, the dielectric nanoparticles become stranded on/in the polymer build material to form a doped build material 17, as shown at c). An inkjettable fusible fluid 18 containing a fusing agent 15, shown at d) being printed, and at e) after being applied, may then printed onto the particulate build material that may assist in forming the rigidity or structure of the part. These steps (d and e) may be omitted if layers be printed without the need for temporary fusing. At locations where there are no dielectric nanoparticles, areas outside of the lens structure may be formed, or alternatively, spacer portions between lenses may be formed. In this example, the fusible fluid does not include the dielectric nanoparticles, but acts as the "ink" or fluid that may fuse with the particulate build material when exposed from photo energy from an energy source 28, e.g., IR nergy, to form the 3D structure, or may temporarily bind the layer for fusing without an energy source. Next, the platform 10 is lowered (by "x") and another layer is printed as previously described and as shown generally at f). There, a dielectric nanoparticle doped lenslet 34 is shown, which is doped by the dielectric nanoparticles and may include a fusing agent applied with the particulate build material. On either side of the lenslet, is an undoped portion 32 of the layer that does not include the dielectric nanoparticles, and thus, may be more optically transparent. In some examples, it may be desirable to print a color or use a colored fusible material in this region to prevent or ameliorate light for entering the lens from the side.

In another example, there may also be arrangements where the inkjettable fluid with dielectric nanoparticles can also be part of an inkjettable fusible fluid as well. In such cases, such as shown in FIG. 2, the dielectric nanoparticles can be selectively applied on a layer by layer basis, or a voxel by voxel basis within the layers, to generate the layers or lenslets within the GRIN lens or GRIN lens assembly (similar to that described in FIG. 1, but with the addition of a fusing agent in the fluid). Thus, in FIG. 2, a) shows substrate or build platform 10 which has a thin layer of polymer build material 12 deposited thereon. Next, b) shows microdroplets of an inkjettable fluid 14 containing dielectric nanoparticles 16, as well as microdroplets of inkjettable fusible fluid 18 can be applied. However, in this example, in both the inkjettable fluid containing the dielectric nanoparticles and the fusible fluid both include a fusing agent 15. Once printed, the binding agent that is present in both fluids and which is now in contact with the polymer build material can be fused by exposing the material to photo energy from an energy source 28, e.g., IR energy, as shown at c) to form the lenslet 34 with an undoped portion 32 of the layer shown at d). Next, as shown at e) the platform 10 is lowered (by "x") and another layer is printed a fused as previously described. At f), the platform is shown lowered again, but in this case, the third layer is printed without dielectric nanoparticles, thereby forming a layer that may be part of an optical spacer, for example.

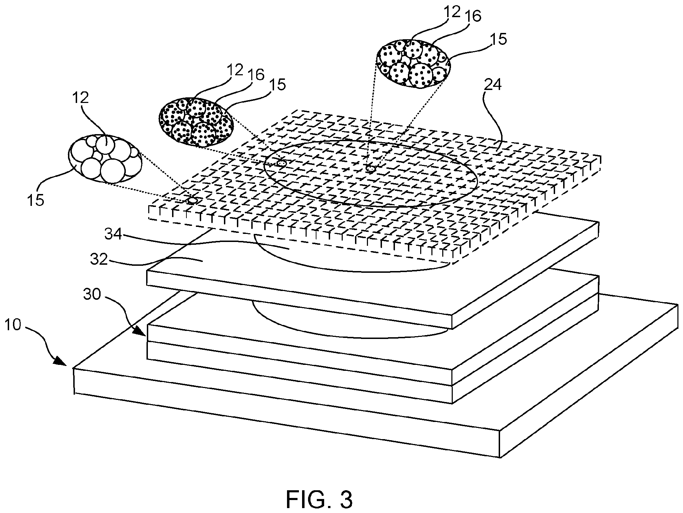

Notably, in the above examples (FIGS. 1 and 2), at each layer or even at each "voxel" within a layer (which can be defined as single pixel in three dimensional space within a layer), the concentration or mass fraction of dielectric nanoparticles (compared to particulate build material) that are placed can be varied, thus providing a high degree of flexibility (tunability), as will be shown in greater detail in FIG. 3. Furthermore, because the present disclosure is about printing 3D optics, the substrate 10 in FIGS. 1-4 herein can be prepared so that the lens system or optics system can be removed (e.g. using a dissolvable adhesive layer or other type of layer that allows for separation of the lens from the substrate); or alternatively, the substrate can actually be an optical device, such as optical sensor or optical source for which the GRIN lens optics system is being prepared. For example, the GRIN lens or GRIN lens system could be printed on a CMOS image sensor or a CCD image sensor, or could be printed on an energy source such as a light source, a laser, or other source that emits electromagnetic energy. Such lenses could also be printed on fiber optics or other similar energy transmitting substrates. Essentially, any substrate that could benefit from the application of a printed lens can be used as the substrate, or as mentioned above, then lens could printed separately on a substrate, separated from the substrate, and then optically coupled to the optical device.

FIGS. 1 and 2 generally show how a GRIN lens or GRIN lens stack or assembly can be formed on a layer by layer basis. However, in further detail regarding the "voxel" variation that may be used to create lenslets with gradient index optics, such lenslets can be printed to provide gradual variation of the refractive index, e.g., axial, spherical, or radial. Essentially, flat lenses can be prepared that do not have the typical aberrations of curved lenses, but can bend light in a manner that is similar to curved lenses. For example, "converging" lenses or "diverging" lenses can be prepared by prepared by decreasing or increasing the density of the dielectric nanoparticles radially. In general, light is refracted more strongly in regions of high refractive index (i.e. larger densities of dielectric nanoparticles) and less in regions that have unmodified refractive indices. The radial direction can be oriented laterally based on each lenslet layer printed. Other lens "shapes" can likewise be printed based on densities of dielectric nanoparticles printed at the voxel level. In each case, when printing lenses using the systems described herein, the refractive index gradient of the GRIN lens or stack printed can be mathematically modeled to determine the appropriate densities that need to be printed, or alternatively, mathematical models coupled with some trial and error can be used to provide predictive density profiles that can be effective for achieving a desired result.

FIG. 3 illustrates one example where a lower density of dielectric nanoparticles may be printed more toward the center of a printed GRIN lens, and a higher density of dielectric nanoparticles may be printed more toward a periphery of the printed GRIN lens. This can also be done in reverse where the higher density is more towards the center and the lower density is more toward the periphery, depending on whether diverging or converging lens is desired. As shown, a substrate 10 is shown having 3D fused or printed layers 30 thereon that may include a dielectric nanoparticle doped lenslet 34 and an undoped portion 32, or may be an optical spacer without printed dielectric nanoparticles. In a few of the layers shown, the undoped portion and the lenslet both include particulate build material 12 with polymer particles, and may also include binding agent 15. Again, the binding agent may or may not be present. However, the dielectric nanoparticle doped lenslet also includes dielectric nanoparticles 16 fused with the particulate build material. As mentioned previously, the particulate build material as a whole may have a transparency from 85% to 100%. In this example, nearer the periphery, the concentration of dielectric nanoparticles are shown as being more dense in number or mass fraction, whereas nearer the center of the lens or lenslet layer, the concentration of the dielectric nanoparticles is shown as being less dense. By printing desired concentrations at the voxel 24 level, a gradient can be generated laterally on a layer by layer basis, which can be used to generate any of a number of GRIN lens designs.

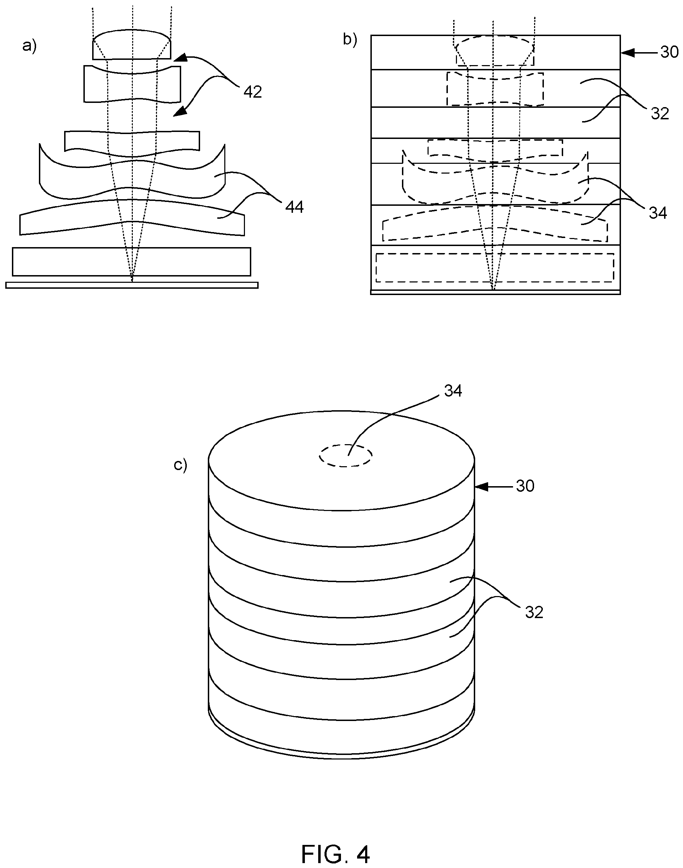

FIG. 4 illustrates schematically a GRIN lens stack or assembly that can be prepared in accordance with examples of the present disclosure. For example, a traditional lens assembly is shown at a) that includes various types of traditional glass lenses 40, including converging lenses, diverging lenses, and optical spacers, etc. Also shown is air space 42 between each lens on the assembly, which is typical of curved lens assemblies where spatial relationships and curvature profiles provide desired optical properties. On the other hand, in accordance with the present disclosure, a GRIN lens stack or assembly is shown at b) which can simulate the optical properties of the more traditional lens stack shown at a). However, the layered and printed lenses are printed to form a monolithic lens structure, as shown at c). Essentially, each of the optical lens shapes shown at a) may be recreated by printing layers 30 (shown thicker than may be applicable in practice) with dielectric nanoparticles at varying densities printed laterally within each layer, as described previously, to form doped lenslets 34 and undoped portions 32. Additionally, rather than having air space between the lenses, spacers can be printed without dielectric nanoparticles, for example (note that there is space between the various lenses). In the schematic structure shown at b) and c), the "lenses" are shown using dashed lines to denote that these GRIN lenses are printed to behave functionally like their counterpart lenses shown at a), but may not actually have the same physical shape as the curved lens. Similar optic characteristics can be achieved by printing varying densities in a gradient along the x-axis, as shown schematically at b).

Advantages of printing GRIN lenses using this method may include the elimination of lens placement, mechanical alignment and assembly costs, since the assembly may be printed as a single monolithic part. Optical fidelity may also be improved because there would be lower error related to precise lens placement. Furthermore, voxel-scale correction of edge aberration defects can be likewise reduced. Because these lenses can be printed digitally, customization and rapid design changes can be carried out without the fabrication of new molds. Furthermore, this technology can be extended into more complex optical systems and sensors, e.g., embedded spectrometers.

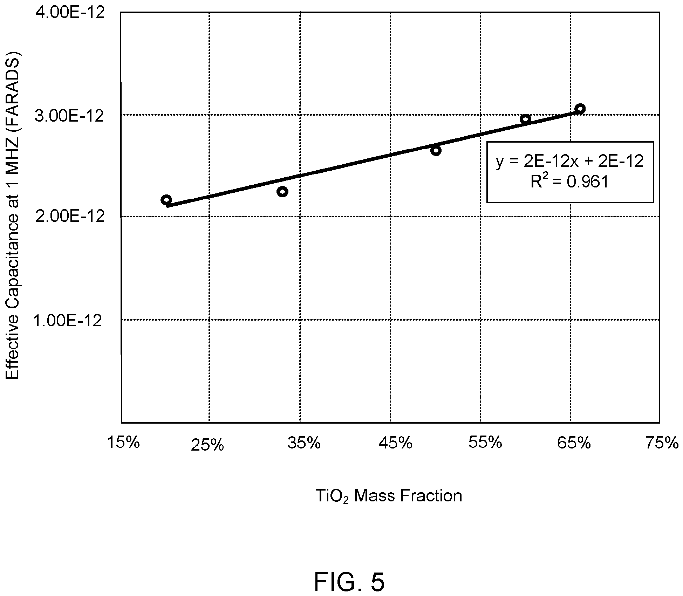

FIG. 5 provides an example of how the effective capacitance (C = e₀ eᵣ A/d) may increase with an increasing concentration or mass fraction of dielectric nanoparticles with respect to the particulate build material. In this equation, C is effective capacitance, e₀ is permittivity of vacuum (a fundamental physical constant), eᵣ is relative dielectric constant (a physical property of the material), A is the capacitor's area, and d is the capacitor's thickness. Notably, in this example, a polyamide 12 (PA-12) powder was used with TiO₂ dielectric nanoparticles. PA-12 was used in this example merely to show that there is a relationship between dielectric nanoparticle number density and effective capacitance (and thus, effective refractive index). PA-12 is not a polymer particle with a transparency of at least 85% or at least 90%, so this build material may not be suitable for optics. Thus, in practice, materials such as polymethyl methacrylate or polycarbonate or some of the other optically transparent or translucent polymers described herein or otherwise would be more suitable for optics. Nevertheless, it was determined that by modifying the number density of TiO₂ dielectric nanoparticles in particulate build material, the effective capacitance could be varied, as shown in FIG. 5 by way of example. Essentially, this data was determined by measuring (at 1 MHz) the complex impedance as a function of frequency. The samples were produced using a Multi Jet Fusion (MJF) process similar to that described in connections with FIGS. 1-4. As apparent in FIG. 5, the slope indicates a clear dependence of the effective capacitance on TiO₂ mass fraction (or concentration of dielectric nanoparticles). It is assumed that with higher quality sample materials that would be suitable for optics, such as can be obtained with the particulate build materials described herein, the slope may be even steeper than that shown in FIG. 5.

Regardless of how the dielectric nanoparticles are brought to the build material, the polymer build material and the dielectric nanoparticles can be fused using heat or electromagnetic energy. For example, heat can be used to melt the fusible material with the dielectric nanoparticles dispersed therein to form lenslets that are layered to form the GRIN lens. In another example, a fusing agent that acts as a binder to hold the build material together in preparation for fusing using heat can be used. IN these two instances, temperatures ranging from 100 °C to 200 °C may be sufficient for the fusion process, though this range may be dependent on the material chosen. In another example, a fusing agent may be used that acts as an antenna compound with an absorption wavelength (or peak absorption wavelength) in the IR range, e.g., from 800 nm to 1400 nm. This can enable heating and melting of the polymer build material under IR energy when combined with the fusible ink, while leaving the unprinted portions of the build material as a powder. In these examples, a fusing lamp can be included that is configured to emit a wavelength from 800 nm to 1400 nm. Suitable fusing lamps can include commercially available infrared lamps and halogen lamps. The fusing lamp can be a stationary lamp or a moving lamp. For example, the lamp can be mounted on a track to move horizontally across the powder bed. Such a fusing lamp can make multiple passes over the bed depending on the amount of exposure used to coalesce printed layers. The fusing lamp can be configured to irradiate the entire powder bed with a substantially uniform amount of energy, for example.

In further detail regarding printing and fusing, the particulate build material or powder bed, or a portion thereof, can be preheated to a temperature below or within the melting or softening range of the polymer particles. In one example, with amorphous polymer, the preheat temperature can be from below the melting range to about 70°C below the melting range. In another example, the preheat temperature can be within the melting range, but below the temperature where melting occurs. In a particular example, the preheat temperature can be from about 50°C to about 120°C and the polymer powder can be polymethyl methacrylate. In another example, the preheat temperature can be about 140°C to about 150°C and the polymer powder can be polycarbonate, e.g. this range for polycarbonate is based on the Vicat softening range for bisphenol A polycarbnate. Preheating can be accomplished with one or more lamps, an oven, a heated support bed, or other types of heaters. In some examples, the entire powder bed can be heated to a substantially uniform temperature.

It is to be understood that this disclosure is not limited to the particular process steps and materials disclosed herein because such process steps and materials may vary somewhat. It is also to be understood that the terminology used herein is used for the purpose of describing particular examples only. The terms are not intended to be limiting because the scope of the present disclosure is intended to be limited only by the appended claims.

It is noted that, as used in this specification and the appended claims, the singular forms "a," "an," and "the" include plural referents unless the context clearly dictates otherwise.

**As** used herein, "liquid vehicle" or "ink vehicle" refers to a liquid fluid in which additive is placed to form an inkjettable fluid. A wide variety of liquid vehicles may be used with the systems and methods of the present disclosure. Such ink vehicles may include a mixture of a variety of different agents, including, surfactants, solvents, co-solvents, anti-kogation agents, buffers, biocides, sequestering agents, viscosity modifiers, surface- active agents, water, etc. Though not part of the liquid vehicle per se, in addition to the colorants and/or polymers that may be included, the liquid vehicle can carry solid additives such as polymers, latexes, UV curable materials, plasticizers, salts, etc. In some example, the additive carried by the liquid vehicle can be the dielectric particles as described herein.

The terms "fusible" or "fusing" is used herein to describe fluids or agents carried by fluids that may be jetted onto the particulate build material, and which assist in temporarily solidifying or permanently fusing the build material to form a layer of a 3D optical part. Heat is typically used to fuse the materials in the material set, but the fusing agent can assist in binding powder together or generating heat from electromagnetic energy. For example, a fusible fluid may include a fusing agent that can bind the part together in preparation for heating to fuse the materials together, or may be an additive that becomes energized or heated when exposed to a frequency or frequencies of electromagnetic radiation. For example, any additive that assists in fusing particulate build material to form the 3D optical part can be used, provided it retains some optical transparency or translucence (unless it is being printed where a more opaque feature is desired, e.g., around the edge of the GRIN lens).

**As** used herein, "jet," "jettable," "jetting," or the like refers to compositions that are ejected from jetting architecture, such as inkjet architecture. Inkjet architecture can include thermal or piezo architecture. Additionally, such architecture can be configured to print varying drop sizes such as less than 10 picoliters, less than 20 picoliters, less than 30 picoliters, less than 40 picoliters, less than 50 picoliters, etc.

**As** used herein, the term "substantial" or "substantially" when used in reference to a quantity or amount of a material, or a specific characteristic thereof, refers to an amount that is sufficient to provide an effect that the material or characteristic was intended to provide. The exact degree of deviation allowable may in some cases depend on the specific context.

As used herein, the term "about" is used to provide flexibility to a numerical range endpoint by providing that a given value may be "a little above" or "a little below" the endpoint. The degree of flexibility of this term can be dictated by the particular variable and determined based on the associated description herein.

Concentrations, amounts, and other numerical data may be expressed or presented herein in a range format. It is to be understood that such a range format is used merely for convenience and brevity and thus should be interpreted flexibly to include not only the numerical values explicitly recited as the limits of the range, but also to include individual numerical values or sub-ranges encompassed within that range as if each numerical value and sub-range is explicitly recited. As an illustration, a numerical range of "about 1 wt% to about 5 wt%" should be interpreted to include not only the explicitly recited values of about 1 wt% to about 5 wt%, but also include individual values and sub-ranges within the indicated range. Thus, included in this numerical range are individual values such as 2, 3.5, and 4 and sub-ranges such as from 1-3, from 2-4, and from 3-5, etc. This same principle applies to ranges reciting only one numerical value. Furthermore, such an interpretation should apply regardless of the breadth of the range or the characteristics being described.

## Claims

1. A GRIN lens comprising heat fused polymer having dielectric nanoparticles dispersed therein, wherein the dielectric nanoparticles are dispersed at a varied number density to generate an effective refractive index gradient along the GRIN lens,
wherein the heat fused polymer prior to fusing includes semi-crystalline or crystalline polymer particles selected from isopolymethylpentene, polypropylene, syndiotactic polystyrene, polyamide, polyketone, polytetrafluoroethylene, polyphenylene sulfide, polyethylene terephthalate, polyoxymethylene, high density polyethylene, and blends thereof, and
wherein the dielectric nanoparticles comprise BaTiO₃, PMN-PT, PbNb₂O₆, PLZT, SiO₂, Al₂O₃,Ta₂O₅, TiO₂, SrTiO₃, ZrO₂, HfO₂, HfSiO₄, La₂O₃, Y₂O₃, α-LaAlO₃, CaCu₃Ti₄O₁₂, La_{1.8}Sr_{0.2}NiO₄, or mixtures thereof.

2. The GRIN lens of claim 1, wherein the GRIN lens includes multiple lenslet layers that are stacked, wherein the lenslet layers include the heat fused polymer having the dielectric nanoparticles dispersed therein, wherein the dielectric nanoparticles have an average size from 1 nm to 100 nm, and wherein individual lenslet layers have a thickness of about 100 µm or less.

3. The GRIN lens of claim 1 or claim 2, wherein the dielectric nanoparticles comprise BaTiO₃, PMN-PT, PbNb₂O₆, PLZT, Ta₂O₅, SrTiO₃, HfO₂, HfSiO₄, La₂O₃, Y₂O₃, α-LaAlO₃, CaCu₃Ti₄O₁₂, La_{1.8}Sr_{0.2}NiO₄, or mixtures thereof.

4. A GRIN lens stack, comprising:
a first GRIN lens comprising heat fused polymer having dielectric nanoparticles dispersed therein, wherein the dielectric nanoparticles are dispersed at variable number density to generate an effective refractive index gradient along the first GRIN lens;
a second GRIN lens comprising heat fused polymer having dielectric nanoparticles dispersed therein, wherein the dielectric nanoparticles are dispersed at variable number density to generate an effective refractive index gradient along the second GRIN lens; and
an optical spacer comprising heat fused polymer without dielectric nanoparticles dispersed therein, said optical spacer between the first GRIN lens and the second GRIN lens,
wherein the first GRIN lens, the optical spacer, and the second GRIN lens are in the form of a unified monolithic part,
wherein the heat fused polymer prior to fusing includes semi-crystalline or crystalline polymer particles selected from isopolymethylpentene, polypropylene, syndiotactic polystyrene, polyamide, polyketone, polytetrafluoroethylene, polyphenylene sulfide, polyethylene terephthalate, polyoxymethylene, high density polyethylene, and blends thereof, and
wherein the dielectric nanoparticles comprise BaTiO₃, PMN-PT, PbNb₂O₆, PLZT, SiO₂, Al₂O₃,Ta₂O₅, TiO₂, SrTiO₃, ZrO₂, HfO₂, HfSiO₄, La₂O₃, Y₂O₃, α-LaAlO₃, CaCu₃Ti₄O₁₂, La_{1.8}Sr_{0.2}NiO₄, or mixtures thereof.

5. The GRIN lens stack of claim 4, wherein the first GRIN lens and the second GRIN lens include multiple lenslet layers that are stacked, wherein the lenslet layers include the heat fused polymer having the dielectric nanoparticles dispersed therein, and wherein the lenslet layers have a thickness of about 100 µm or less.

6. The GRIN lens stack of claim 4, wherein the first GRIN lens and the second GRIN lens have a different distribution of dielectric nanoparticles such that the first GRIN lens and the second GRIN lens have a different effective refractive index gradient compared to one another.

7. The GRIN lens stack of claim 4, further comprising a third GRIN lens comprising heat fused polymer having dielectric nanoparticles dispersed therein, wherein the dielectric nanoparticles are dispersed at variable number density to generate an effective refractive index gradient along the third GRIN lens.

8. A material set for producing a GRIN lens or a stack of GRIN lenses by 3D printing, comprising:
a particulate build material including polymer particles having an average particle size from 10 µm to 100 µm, which are semi-crystalline or crystalline polymer particles selected from isopolymethylpentene, polypropylene, syndiotactic polystyrene, polyamide, polyketone, polytetrafluoroethylene, polyphenylene sulfide, polyethylene terephthalate, polyoxymethylene, high density polyethylene, and blends thereof, and wherein the polymer particles when they are heat fused and then cooled to form the lens have an optical transparency from 85% to 100%, when measured at 100 µm thick after heat fusing; and
an inkjettable fluid for application to the build material for 3D printing, said inkjettable fluid including dielectric nanoparticles having an average particle size from 1 nm to 100 nm, wherein the dielectric nanoparticles comprise BaTiO₃, PMN-PT, PbNb₂O₆, PLZT, SiO₂, Al₂O₃,Ta₂O₅, TiO₂, SrTiO₃, ZrO₂, HfO₂, HfSiO₄, La₂O₃, Y₂O₃, α-LaAlO₃, CaCu₃Ti₄O₁₂, La_{1.8}Sr_{0.2}NiO₄, or mixtures thereof.

9. The material set of claim 8, , wherein the material set further comprises a fusing agent present in the inkjettable fluid, a fusing agent present in a second inkjettable fluid, or both.

10. The material set of claim 8, wherein the dielectric nanoparticles comprise BaTiO₃, PMN-PT, PbNb₂O₆, PLZT, Ta₂O₅, SrTiO₃, HfO₂, HfSiO₄, La₂O₃, Y₂O₃, α-LaAlO₃, CaCu₃Ti₄O₁₂, La_{1.8}Sr_{0.2}NiO₄, or mixtures thereof.

## Patentansprüche

1. GRIN-Linse, die ein wärmeverschmolzenes Polymer umfasst, das darin dispergierte dielektrische Nanopartikel aufweist, wobei die dielektrischen Nanopartikel bei einer variierten Zahlendichte dispergiert sind, um einen effektiven Brechungsindexgradienten entlang der GRIN-Linse zu erzeugen,
wobei das wärmeverschmolzene Polymer vor dem Verschmelzen teilkristalline oder kristalline Polymerpartikel beinhaltet, die aus Isopolymethylpenten, Polypropylen, syndiotaktischem Polystyrol, Polyamid, Polyketon, Polytetrafluorethylen, Polyphenylensulfid, Polyethylenterephthalat, Polyoxymethylen, Polyethylen hoher Dichte und Mischungen davon ausgewählt sind, und
wobei die dielektrischen Nanopartikel BaTiO₃, PMN-PT, PbNb₂O₆, PLZT, SiO₂, Al₂O₃,Ta₂O₅, TiO₂, SrTiO₃, ZrO₂, HfO₂, HfSiO₄, La₂O₃, Y₂O₃, α-LaAlO₃, CaCu₃Ti₄O₁₂, La_{1.8}Sr_{0.2}NiO₄ oder Mischungen davon umfassen.

2. GRIN-Linse nach Anspruch 1, wobei die GRIN-Linse mehrere Mikrolinsenschichten beinhaltet, die gestapelt sind, wobei die Mikrolinsenschichten das wärmeverschmolzene Polymer beinhalten, das die darin dispergierten dielektrischen Nanopartikel aufweist, wobei die dielektrischen Nanopartikel eine durchschnittliche Größe von 1 nm bis 100 nm aufweisen, und wobei einzelne Mikrolinsenschichten eine Dicke von etwa 100 µm oder weniger aufweisen.

3. GRIN-Linse nach Anspruch 1 oder 2, wobei die dielektrischen Nanopartikel BaTiO₃, PMN-PT, PbNb₂O₆, PLZT, Ta₂O₅, SrTiO₃, HfO₂, HfSiO₄, La₂O₃, Y₂O₃, α-LaAlO₃, CaCu₃Ti₄O₁₂, La_{1.8}Sr_{0.2}NiO₄ oder Mischungen davon umfassen.

4. GRIN-Linsenstapel, der Folgendes umfasst:
eine erste GRIN-Linse, die ein wärmeverschmolzenes Polymer umfasst, das darin dispergierte dielektrische Nanopartikel aufweist, wobei die dielektrischen Nanopartikel bei variabler Zahlendichte dispergiert sind, um einen effektiven Brechungsindexgradienten entlang der ersten GRIN-Linse zu erzeugen;
eine zweite GRIN-Linse, die ein wärmeverschmolzenes Polymer umfasst, das darin dispergierte dielektrische Nanopartikel aufweist, wobei die dielektrischen Nanopartikel bei variabler Zahlendichte dispergiert sind, um einen effektiven Brechungsindexgradienten entlang der zweiten GRIN-Linse zu erzeugen; und
einen optischen Abstandshalter, der wärmeverschmolzenes Polymer ohne darin dispergierte dielektrische Nanopartikel umfasst, wobei sich der optische Abstandshalter zwischen der ersten GRIN-Linse und der zweiten GRIN-Linse befindet,
wobei die erste GRIN-Linse, der optische Abstandshalter und die zweite GRIN-Linse in der Form eines vereinheitlichten monolithischen Teils vorliegen,
wobei das wärmeverschmolzene Polymer vor dem Verschmelzen teilkristalline oder kristalline Polymerpartikel beinhaltet, die aus Isopolymethylpenten, Polypropylen, syndiotaktischem Polystyrol, Polyamid, Polyketon, Polytetrafluorethylen, Polyphenylensulfid, Polyethylenterephthalat, Polyoxymethylen, Polyethylen hoher Dichte und Mischungen davon ausgewählt sind, und
wobei die dielektrischen Nanopartikel BaTiO₃, PMN-PT, PbNb₂O₆, PLZT, SiO₂, Al₂O₃,Ta₂O₅, TiO₂, SrTiO₃, ZrO₂, HfO₂, HfSiO₄, La₂O₃, Y₂O₃, α-LaAlO₃, CaCu₃Ti₄O₁₂, La_{1.8}Sr_{0.2}NiO₄ oder Mischungen davon umfassen.

5. GRIN-Linsenstapel nach Anspruch 4, wobei die erste GRIN-Linse und die zweite GRIN-Linse mehrere Mikrolinsenschichten beinhalten, die gestapelt sind, wobei die Mikrolinsenschichten das wärmeverschmolzene Polymer beinhalten, das darin dispergierte dielektrische Nanopartikel aufweist, und wobei die Mikrolinsenschichten eine Dicke von etwa 100 µm oder weniger aufweisen.

6. GRIN-Linsenstapel nach Anspruch 4, wobei die erste GRIN-Linse und die zweite GRIN-Linse eine unterschiedliche Verteilung von dielektrischen Nanopartikeln derart aufweisen, dass die erste GRIN-Linse und die zweite GRIN-Linse einen unterschiedlich effektiven Brechungsindexgradienten im Vergleich zueinander aufweisen.

7. GRIN-Linsenstapel nach Anspruch 4, der ferner eine dritte GRIN-Linse umfasst, die wärmeverschmolzenes Polymer umfasst, das darin dispergierte dielektrische Nanopartikel aufweist, wobei die dielektrischen Nanopartikel bei variabler Zahlendichte dispergiert sind, um einen effektiven Brechungsindexgradienten entlang der dritten GRIN-Linse zu erzeugen.

8. Materialsatz zum Herstellen einer GRIN-Linse oder eines Stapels von GRIN-Linsen durch 3D-Druck, der Folgendes umfasst:
ein partikelförmiges Baumaterial, das Polymerpartikel beinhaltet, die eine durchschnittliche Partikelgröße von 10 µm bis 100 µm aufweisen, die teilkristalline oder kristalline Polymerpartikel sind, die aus Isopolymethylpenten, Polypropylen, syndiotaktischem Polystyrol, Polyamid, Polyketon, Polytetrafluorethylen, Polyphenylensulfid, Polyethylenterephthalat, Polyoxymethylen, Polyethylen hoher Dichte, und Mischungen davon ausgewählt sind, und wobei die Polymerpartikel, wenn sie wärmeverschmolzen und anschließend abgekühlt werden, um die Linse auszubilden, eine optische Transparenz von 85 % bis 100 % aufweisen, wenn sie nach dem Wärmeverschmelzen bei einer Dicke von 100 µm gemessen werden; und
ein tintenstrahlfähiges Fluid zum Auftragen auf das Baumaterial zum 3D-Drucken, wobei das tintenstrahlfähige Fluid dielektrische Nanopartikel beinhaltet, die eine durchschnittliche Partikelgröße von 1 nm bis 100 nm aufweisen, wobei die dielektrischen Nanopartikel BaTiO₃, PMN-PT, PbNb₂O₆, PLZT, SiO₂, Al₂O₃, Ta₂O₅, TiO₂, SrTiO₃, ZrO₂, HfO₂, HfSiO₄, La₂O₃, Y₂O₃, α-LaAlO₃, CaCu₃Ti₄O₁₂,La_{1.8}Sr_{0.2}NiO₄ oder Mischungen davon umfassen.

9. Materialsatz nach Anspruch 8, wobei der Materialsatz ferner ein Schmelzmittel, das in dem tintenstrahlfähigen Fluid vorhanden ist, ein Schmelzmittel, das in einem zweiten tintenstrahlfähigen Fluid vorhanden ist, oder beides umfasst.

10. Materialsatz nach Anspruch 8, wobei die dielektrischen Nanopartikel BaTiO₃, PMN-PT, PbNb₂O₆, PLZT, Ta₂O₅, SrTiO₃, HfO₂, HfSiO₄, La₂O₃, Y₂O₃, α-LaAlO₃, CaCu₃Ti₄O₁₂, La_{1.8}Sr_{0.2}NiO₄ oder Mischungen davon umfassen.

## Revendications

1. Lentille GRIN, comprenant un polymère fusionné à chaud dans lequel sont dispersées des nanoparticules diélectriques, les nanoparticules diélectriques étant dispersées à une densité de nombre variée pour générer un gradient d'indice de réfraction effectif le long de la lentille GRIN,
dans laquelle le polymère fusionné à chaud avant la fusion comporte des particules de polymère semi-cristallin ou cristallin choisies parmi l'isopolyméthylpentène, le polypropylène, le polystyrène syndiotactique, le polyamide, la polycétone, le polytétrafluoroéthylène, le sulfure de polyphénylène, le polyéthylène téréphtalate, le polyoxyméthylène, le polyéthylène haute densité et leurs mélanges, et
dans laquelle les nanoparticules diélectriques comprennent BaTiO₃, PMN-PT, PbNb₂O₆, PLZT, SiO₂, Al₂O₃,Ta₂O₅, TiO₂, SrTiO₃, ZrO₂, HfO₂, HfSiO₄, La₂O₃, Y₂O₃, α-LaAlO₃, CaCu₃Ti₄O₁₂, La_{1.8}Sr_{0.2}NiO₄, ou leurs mélanges.

2. Lentille GRIN selon la revendication 1, dans laquelle la lentille GRIN comporte plusieurs couches de microlentille qui sont empilées, les couches de microlentille comportant le polymère fusionné à chaud dans lequel les nanoparticules diélectriques sont dispersées, les nanoparticules diélectriques ayant une taille moyenne de 1 nm à 100 nm, et les couches de microlentille individuelles ayant une épaisseur d'environ 100 µm ou moins.

3. Lentille GRIN selon la revendication 1 ou la revendication 2, dans laquelle les nanoparticules diélectriques comprennent BaTiO₃, PMN-PT, PbNb₂O₆, PLZT, Ta₂O₅, SrTiO₃, HfO₂, HfSiO₄, La₂O₃, Y₂O₃, α-LaAlO₃, CaCu₃Ti₄O₁₂,La_{1.8}Sr_{0.2}NiO₄, ou leurs mélanges.

4. Empilement de lentilles GRIN, comprenant :
une première lentille GRIN comprenant un polymère fusionné à chaud dans lequel sont dispersées des nanoparticules diélectriques, les nanoparticules diélectriques étant dispersées à densité de nombre variable pour générer un gradient d'indice de réfraction effectif le long de la première lentille GRIN ;
une deuxième lentille GRIN comprenant un polymère fusionné à chaud dans lequel sont dispersées des nanoparticules diélectriques, les nanoparticules diélectriques étant dispersées à densité de nombre variable pour générer un gradient d'indice de réfraction effectif le long de la deuxième lentille GRIN ; et
un espaceur optique comprenant un polymère fusionné à chaud sans nanoparticules diélectriques dispersées à l'intérieur, ledit espaceur optique entre la première lentille GRIN et la deuxième lentille GRIN,
dans lequel la première lentille GRIN, l'espaceur optique et la deuxième lentille GRIN se présentent sous la forme d'une partie monolithique unifiée,
dans lequel le polymère fusionné à chaud avant la fusion comporte des particules de polymère semi-cristallin ou cristallin choisies parmi l'isopolyméthylpentène, le polypropylène, le polystyrène syndiotactique, le polyamide, la polycétone, le polytétrafluoroéthylène, le sulfure de polyphénylène, le polyéthylène téréphtalate, le polyoxyméthylène, le polyéthylène haute densité et leurs mélanges, et
dans lequel les nanoparticules diélectriques comprennent BaTiO₃, PMN-PT, PbNb₂O₆, PLZT, SiO₂, Al₂O₃,Ta₂O₅, TiO₂, SrTiO₃, ZrO₂, HfO₂, HfSiO₄, La₂O₃, Y₂O₃, α-LaAlO₃, CaCu₃Ti₄O₁₂, La_{i.8}Sr_{0.2}NiO₄, ou leurs mélanges.

5. Empilement de lentilles GRIN selon la revendication 4, dans lequel la première lentille GRIN et la deuxième lentille GRIN comportent plusieurs couches de microlentilles qui sont empilées, les couches de microlentilles comportant le polymère fusionné à chaud dans lequel les nanoparticules diélectriques sont dispersées, et les couches de microlentilles ont une épaisseur d'environ 100 µm ou moins.

6. Empilement de lentilles GRIN selon la revendication 4, dans lequel la première lentille GRIN et la deuxième lentille GRIN ont une distribution différente de nanoparticules diélectriques de telle sorte que la première lentille GRIN et la deuxième lentille GRIN ont un gradient d'indice de réfraction effectif différent l'une de l'autre.

7. Empilement de lentilles GRIN selon la revendication 4, comprenant en outre une troisième lentille GRIN comprenant un polymère fusionné à chaud dans lequel sont dispersées des nanoparticules diélectriques, les nanoparticules diélectriques étant dispersées à densité de nombre variable pour générer un gradient d'indice de réfraction effectif le long de la troisième lentille GRIN.

8. Ensemble de matériaux pour la production d'une lentille GRIN ou d'un empilement de lentilles GRIN par impression 3D, comprenant :
un matériau de construction particulaire comportant des particules de polymère ayant une taille moyenne de particules de 10 µm à 100 µm, qui sont des particules de polymère semi-cristallin ou cristallin choisies parmi l'isopolyméthylpentène, le polypropylène, le polystyrène syndiotactique, le polyamide, la polycétone, le polytétrafluoroéthylène, le sulfure de polyphénylène, le polyéthylène téréphtalate, le polyoxyméthylène, le polyéthylène haute densité, et leurs mélanges, et dans lequel les particules de polymère lorsqu'elles sont fusionnées à chaud puis refroidies pour former la lentille ont une transparence optique de 85 % à 100 %, lorsqu'elle est mesurée à 100 µm d'épaisseur après fusion à chaud ; et
un fluide pour impression à jet d'encre destiné à être appliqué sur le matériau de construction pour l'impression 3D, ledit fluide pour impression à jet d'encre comportant des nanoparticules diélectriques ayant une taille moyenne de particules de 1 nm à 100 nm, les nanoparticules diélectriques comprenant BaTiO₃, PMN-PT, PbNb₂O₆, PLZT, SiO₂, Al₂O₃,Ta₂O₅, TiO₂, SrTiO₃, ZrO₂, HfO₂, HfSiO₄, La₂O₃, Y₂O₃, α-LaAlO₃, CaCu₃Ti₄O₁₂, La_{i.8}Sr_{0.2}NiO₄, ou leurs mélanges.

9. Ensemble de matériaux selon la revendication 8, dans lequel l'ensemble de matériaux comprend en outre un agent de fusion présent dans le fluide pour impression à jet d'encre, un agent de fusion présent dans un second fluide pour impression à jet d'encre, ou les deux.

10. Ensemble de matériaux selon la revendication 8, dans lequel les nanoparticules diélectriques comprennent BaTiO₃, PMN-PT, PbNb₂O₆, PLZT, Ta₂O₅, SrTiO₃, HfO₂, HfSiO₄, La₂O₃, Y₂O₃, α-LaAlO₃, CaCu₃Ti₄O₁₂,La_{i.8}Sr_{0.2}NiO₄, ou leurs mélanges.
